Europäisches Patentamt

European Patent Office

Office européen des brevets

(11) Numéro de publication : **0 022 719**
**B1**

# FASCICULE DE BREVET EUROPÉEN

(45) Date de publication du fascicule du brevet :
**16.02.83**

(51) Int. Cl.³ : **H 01 G   9/02**

(21) Numéro de dépôt : **80401042.9**

(22) Date de dépôt : **10.07.80**

(54) **Condensateur électrolytique composite.**

(30) Priorité : **17.07.79 FR 7918496**

(43) Date de publication de la demande :
**21.01.81 Bulletin 81/03**

(45) Mention de la délivrance du brevet :
**16.02.83 Bulletin 83/07**

(84) Etats contractants désignés :
**DE GB IT SE**

(56) Documents cités :
**US A 3 638 077**
**US A 3 908 157**

(73) Titulaire : **LES CONDENSATEURS SIC SAFCO**
**107, rue de Bellevue**
**F-92704 Colombes cedex (FR)**

(72) Inventeur : **Constanti, Jean**
**5, rue de Strasbourg**
**F-78300 Poissy (FR)**       .
Inventeur : **Grandadam, Pierre**
**55, rue Boileau**
**F-75016 Paris (FR)**

(74) Mandataire : **Lecca, Jean et al**
**CABINET PLASSERAUD 84, rue d'Amsterdam**
**F-75009 Paris (FR)**

# 0 022 719

## Condensateur électrolytique composite

La présente invention concerne les condensateurs électrolytiques qui comportent, à la manière connue, un isolant ou diélectrique, imprégné par un électrolyte, appelé communément séparateur, entre deux électrodes, à savoir une anode et une cathode, notamment les condensateurs électrolytiques formés par des rubans bobinés constituant l'anode, la cathode et le séparateur.

L'invention s'applique particulièrement aux condensateurs électrolytiques utilisés en électrotechnique à des tensions de service supérieures à 250 volts dans diverses applications industrielles soit en régime impulsionnel de charge et décharge comme par exemple dans les soudeuses et les dispositifs d'aimantation, soit en filtrage des courants alternatifs redressés ou des courants non sinusoïdaux comme par exemple dans les alimentations à courant haché, et principalement dans les cas où la puissance mise en jeu nécessite le montage de ces condensateurs en séries parallèles sous forme de batteries.

Un condensateur de ce type est décrit dans le brevet des Etats-Unis n° 3 978 377 au nom de Jean Constanti et cédé à la demanderesse, notamment avec référence à la figure 8.

Dans les applications mentionnées ci-dessus, un condensateur électrolytique est généralement traversé par des courants d'intensité élevée à des fréquences diverses et se trouve soumis à un échauffement proportionnel à la résistance électrique série de ses divers éléments constitutifs : bornes, connexions, soudures, rubans d'anode et de cathode, ruban de séparateur imprégné d'électrolyte. Il doit de plus pouvoir fonctionner dans un large intervalle de températures en conservant des caractéristiques électriques suffisamment stables.

La mesure de l'impédance Z à 100 kHz, qui permet d'obtenir la valeur de la résistance série du condensateur, et les mesures directes de résistance sur les éléments constitutifs séparés montrent que le rôle du séparateur est le plus important. Par exemple, dans un condensateur de 650 $\mu$F à 480 volts comportant une anode de 340 × 9 cm et un séparateur en papier, les résistances internes se répartissent de la manière suivante :

— 3 m$\Omega$ pour les bandes d'anode et de cathode
— 2 m$\Omega$ pour les pattes de connexion et les soudures
— 90 m$\Omega$ pour le séparateur imprégné d'électrolyte.

Par ailleurs, dans le montage en batterie le volume spécifique V du condensateur exprimé en cm$^3$/$\mu$F a une influence considérable sur l'encombrement, le poids, le prix ; il en est de même de la tension de service V, l'énergie emmagasinée étant fonction de V$^2$.

On peut donc définir un coefficient de qualité donné par l'expression V$^2$/Zv.

Le but de l'invention est d'augmenter ce coefficient de qualité, par exemple en réduisant l'impédance du séparateur imprégné d'électrolyte (qui constitue l'essentiel de l'impédance totale Z du condensateur figurant dans le coefficient de qualité) pour une tension de service V donnée.

L'invention a donc essentiellement pour objet un condensateur électrolytique composite comportant un tel séparateur.

Le séparateur classique en la matière est constitué par du papier sous forme de ruban, imprégné d'un électrolyte, comme dans l'exemple précédent.

On a déjà proposé de remplacer un tel séparateur qui a une impédance relativement élevée, ces propositions étant de deux sortes.

D'une part, on a suggéré de réaliser un séparateur intégré à la surface de l'anode et/ou de la cathode, mais on n'a pu former ainsi, que des séparateurs relativement minces ne permettant pas un fonctionnement du condensateur en haute tension ; en outre de tels séparateurs ne permettent pas un accès facile de l'électrolyte aux électrodes auxquelles ils sont intégrés en raison de la pénétration, dans les trous de la gravure, des résines employées.

D'autre part, on a proposé de substituer au ruban ou bande de papier, ou d'associer à un tel ruban, d'autres rubans, notamment de deux types.

Le premier type correspond à des séparateurs de nature fibreuse obtenus par des modifications imposées au papier absorbant et parmi lesquels on peut citer :
— le papier chargé de carbon black ou de graphite pour diminuer la résistance série, mais la valeur de celle-ci ne descend qu'à 10$^7$ $\Omega \cdot$ cm pour une feuille de 25 $\mu$m, valeur trop élevée par rapport à celle d'un électrolyte haute tension qui est de l'ordre de 10$^3$ $\Omega \cdot$ cm,
— le papier revêtu par imprégnation d'une couche de méthyl cellulose, ou collé sur un film de cellulose régénérée, mais qui présente une faible porosité et des difficultés d'imprégnation.

Le second type comprend les séparateurs de nature non fibreuse, ne comportant pas de papier, tels que :
— la cellulose régénérée qui fonctionne par plastification dans un solvant de l'électrolyte, mais a l'inconvénient d'une porosité nulle qui freine le mouvement des ions et ne permet pas d'obtenir une faible résistance série,
— la gélatine en feuille, qui présente le même inconvénient que la cellulose régénérée en ce qui concerne la porosité et de plus possède une plus grande fragilité mécanique,

2

— le polypropylène poreux dont l'emploi a été décrit dans le brevet des Etats-Unis n° 3 908 157 au nom de Sidney D. Ross, en substitution du papier pour des séparateurs de 25 μm d'épaisseur dans des condensateurs basse tension fonctionnant à 20 volts.

On a donc proposé, d'une part, d'adjoindre au papier de la cellulose régénérée ou certains autres matériaux autres que le polypropylène et, d'autre part, de substituer au papier du polypropylène mais uniquement pour des condensateurs basse tension.

L'invention vise à réaliser un séparateur composite présentant une faible résistance série (dans un grand intervalle de températures, par exemple de l'ordre de − 55 °C à + 105 °C), permettant de réaliser des condensateurs électrolytiques aptes à fonctionner sous une tension élevée et à stocker une haute quantité d'énergie et ayant un facteur de qualité $V^2/Zv$ élevé.

Dans l'invention le séparateur est constitué par l'association d'au moins une feuille de polypropylène poreux et d'au moins une feuille de papier absorbant imprégné par un électrolyte.

De préférence :

— le polypropylène a une porosité cellulaire ouverte d'au moins 30 % et possède un réseau de capillaires de section inférieure à $0,2 \cdot 10^{-8}$ cm$^2$ ;

— le papier absorbant possède une densité apparente non supérieure à 0,55 ;

— l'électrolyte comporte dans sa phase solvante au moins un solvant choisi dans le groupe constitué par la buty-rolactone et l'éthylène glycol.

Un condensateur électrolytique selon l'invention est caractérisé par le fait qu'il comporte un tel séparateur avec de préférence une feuille de polypropylène placée contre l'anode du condensateur.

En effet la demanderesse a constaté avec surprise, d'une part, qu'on pouvait mettre en œuvre avec une feuille de polypropylène un électrolyte comportant comme solvant de la butyrolactone ou de l'éthylène glycol, alors que le brevet précité n° 3 908 157 ne prévoyait que d'autres types de solvants, et que, d'autre part, il était possible d'associer le polypropylène au papier, ce qui n'était également pas prévu par ce brevet ou d'autres publications antérieures qui ne prévoyaient que l'association du papier à d'autres types de polymères.

En outre la demanderesse a constaté que l'association de papier et de polypropylène permettait de meilleurs séparateurs, notamment au point de vue facteur de qualité $V^2/Zv$, résistance série et teneur aux hautes tensions, notamment lorsque l'on place une feuille de polypropylène contre l'anode.

L'invention pourra, de toute façon, être bien comprise à l'aide du complément de description qui suit, ainsi que des dessins ci-annexés, lesquels complément et dessins sont, bien entendu, donnés surtout à titre d'indication.

Les figures 1 et 2 représentent deux condensateurs électrolytiques mettant en œuvre les perfectionnements selon l'invention.

Les figures 3, 4 et 5 illustrent, au moyen de courbes comparatives, les caractéristiques des condensateurs dotés des perfectionnements selon l'invention et des condensateurs de la technique antérieure, les fréquences en hertz étant portées en abscisses et les impédances internes étant portées en ordonnées ; les trois figures 3, 4 et 5 correspondent à des mesures faites à + 25 °C, + 105 °C et − 40 °C respectivement.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser des séparateurs pour condensateurs électrolytiques et de tels condensateurs, on s'y prend comme suit ou d'une manière analogue.

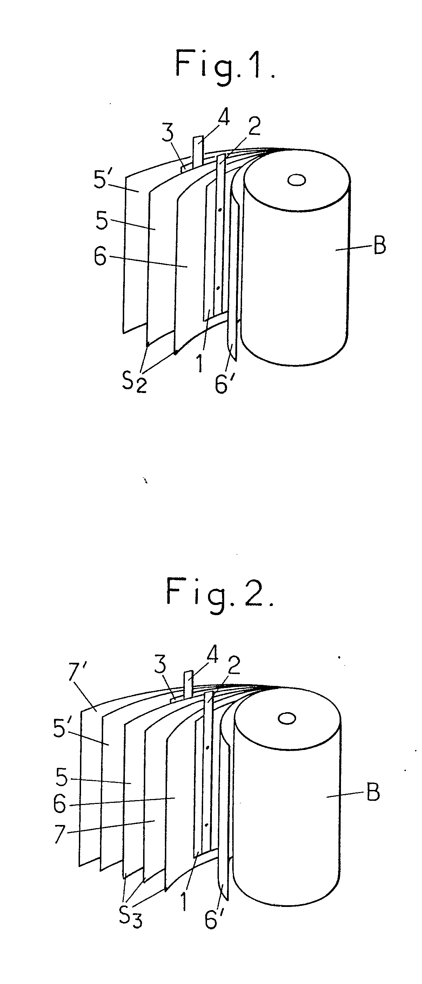

Référence étant d'abord faite aux figures 1 et 2, on voit qu'un condensateur électrolytique du type avec un bobinage B, illustré à moitié déroulé, doté des perfectionnements selon l'invention, comporte tout d'abord, à la manière connue :

— une anode 1, constituée, dans le mode de réalisation préféré, par une feuille d'aluminium gravé, formée anodiquement à 600 volts et épaisse de 90 microns (μm),

— une patte de connexion 2 pour cette anode,

— une cathode 3, constituée, dans le mode de réalisation préféré, par une feuille d'aluminium gravé et épaisse de 30 μm,

— une patte de connexion 4 pour cette cathode.

Le séparateur $S_2$ ou $S_3$ comporte, conformément à l'invention, au moins deux feuilles, savoir au moins une feuille de papier absorbant imprégné par un électrolyte et au moins une feuille de polypropylène poreux.

Dans le mode de réalisation de la figure 1, le séparateur $S_2$ est constitué uniquement de deux feuilles, à savoir une feuille 5 de papier absorbant imprégné d'électrolyte et une feuille 6 de polypropylène. Pour les raisons qui apparaîtront ci-après, la feuille de papier 5 est disposée contre la cathode 3, tandis que la feuille de polypropylène 6 est disposée contre l'anode 1.

La partie du séparateur symétrique de $S_2$ comporte une feuille de papier 5' disposée de préférence contre la cathode 3 et une feuille de polypropylène 6' disposée contre l'anode 1.

Dans le mode de réalisation de la figure 2, le séparateur $S_3$ est constitué de trois feuilles, à savoir deux feuilles, de papier 5 et de polypropylène 6, réalisées et disposées comme dans le mode de réalisation de la figure 1 et une troisième feuille intermédiaire 7 disposée entre les feuilles 5 et 6 et réalisée, comme la feuille 5, en papier absorbant imprégné d'électrolyte.

**0 022 719**

La partie du séparateur symétrique de $S_3$ comporte une feuille de papier 5' et une feuille de polypropylène 6' réalisées et disposées comme dans le mode de réalisation de la figure 1 et une troisième feuille intermédiaire 7' disposée entre les feuilles 5' et 6'.

Les feuilles 5', 6' et 7' sont réalisées comme les feuilles 5, 6 et 7 respectivement.

Pour établir les avantages des séparateurs selon l'invention par rapport aux séparateurs de la technique antérieure, on a construit une série de condensateurs bobinés comportant tous des anodes et des cathodes 1 et 3 du type décrit ci-dessus et deux ou trois feuilles séparatrices.

Les séparateurs des huit condensateurs ainsi construits ont été réalisés comme indiqué dans le tableau ci-après.

(Voir tableau, page 5)

| Modèle de séparateur | Epaisseur totale du séparateur | Feuille contre l'anode | Feuille intermédiaire éventuelle | Feuille contre la cathode |
|---|---|---|---|---|
| I | 75 | polypropylène poreux 25µm | polypropylène poreux 25µm | polypropylène poreux 25µm |
| II | 125 | papier d = 0,30 - 75 µm | - | papier d = 0,30 - 50µm |
| III | 125 | polypropylène poreux 25µm | papier d = 0,30 - 50 µm | papier d = 0,30 - 50µm |
| IV | 125 | papier d = 0,30 - 50 µm | papier d = 0,30 - 50 µm | polypropylène poreux 25µm |
| V | 125 | papier d = 0,30 - 50 µm | polypropylène poreux 25µm | papier d = 0,30 - 50µm |
| VI | 175 | papier d = 0,30 - 75 µm | papier d = 0,30 - 50µm | papier d = 0,30 - 50µm |
| VII | 175 | polypropylène poreux 25µm | papier d = 0,30 - 75µm | papier d = 0,30 - 75µm |
| VIII | 175 | papier d = 0,30 - 75 µm | polypropylène poreux 25µm | papier d = 0,30 - 75µm |

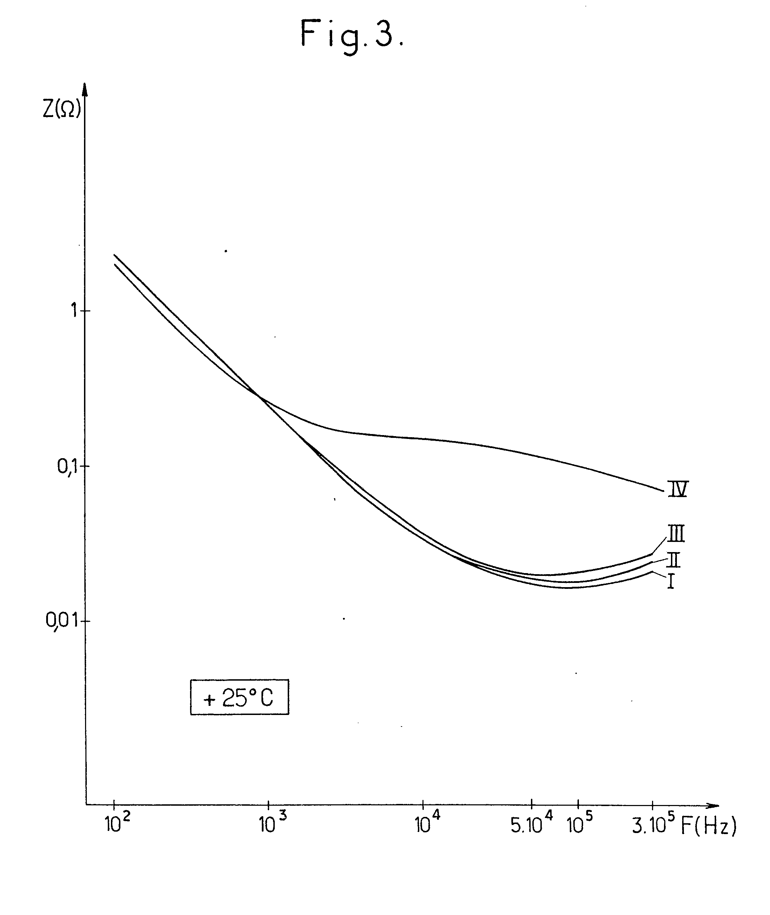

La figure 3 donne les courbes d'impédance Z en fonction de la fréquence à la température de + 25 °C relevées sur les condensateurs suivants :

Courbe I

Condensateur avec séparateur du modèle I composé de trois feuilles de polypropylène poreux de 25 μm soit au total 75 μm d'épaisseur.

Courbe II

Condensateur avec séparateur du modèle II composé d'une feuille de papier de 75 μm densité apparente 0,30 placée contre l'anode et d'une feuille de papier d'épaisseur 50 μm densité apparente 0,30 placée contre la cathode soit au total 125 μm d'épaisseur.

Courbe III

Condensateur avec séparateur du modèle III conforme à l'invention composé de trois feuilles : une feuille de polypropylène poreux de 25 μm d'épaisseur placée contre l'anode et deux feuilles de papier absorbant d'épaisseur 50 μm densité apparente 0,30 placée contre la cathode, soit au total 125 μm d'épaisseur.

Courbe IV

Condensateur Sic-Safco de 650 μF 480 volts du marché commercial actuel avec séparateur papier de densité apparente 0,50 figurant au tableau XII de la présente description.

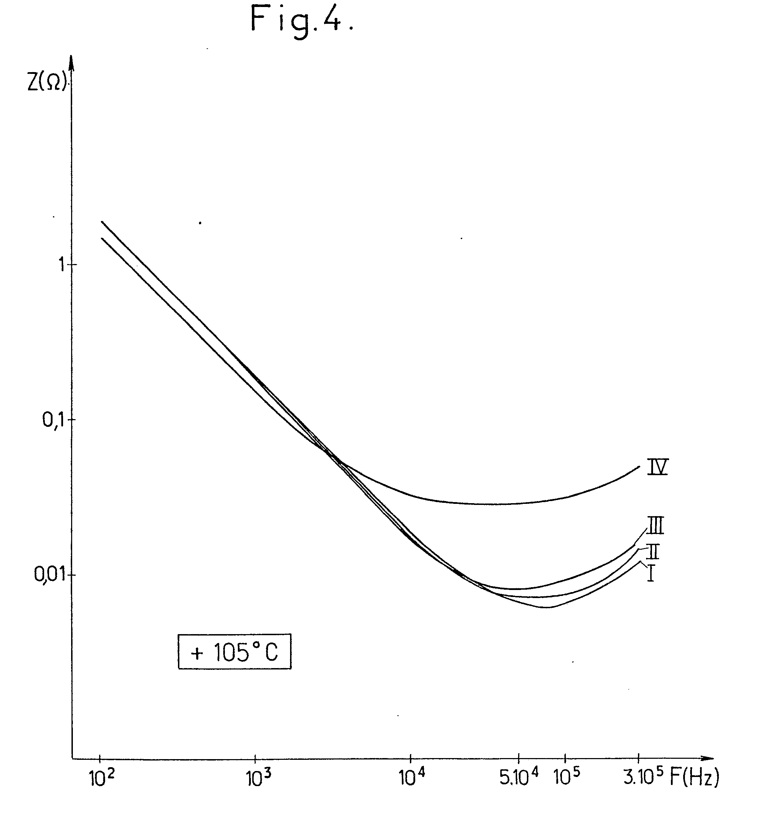

La figure 4 donne les courbes d'impédance Z en fonction de la fréquence à la température de 105 °C pour les mêmes éléments que ceux de la figure 3.

La figure 5 donne les courbes d'impédance Z en fonction de la fréquence à la température de − 40 °C pour les mêmes éléments que ceux de la figure 3.

On va maintenant donner des indications plus détaillées concernant la structure des séparateurs des modèles I à VIII et exposer les essais effectuées.

Les condensateurs utilisés pour établir la comparaison entre les séparateurs I à VIII ont été bobinés avec une anode de 320 × 9 cm en aluminium de titre 99,99 d'épaisseur 90 μm gravé et formé anodiquement à 600 volts et avec une cathode de 30 microns d'épaisseur en aluminium gravé, séparées par les séparateurs de composition indiquée dans ce qui précède et rappelée dans les tableaux ci-après.

Les bobinages obtenus ont été imprégnés avec un électrolyte pour haute tension formulé selon le brevet des Etats-Unis n° 3 638 077 au nom de Bernard Chesnot et cédé à la demanderesse, puis placés chacun dans un boîtier de condensateur électrolytique classique de filtrage de diamètre 51 mm et hauteur 114 mm.

Tous les condensateurs ainsi fabriqués ont été introduits dans une enceinte chauffée à une température uniforme de 85 °C et soumis au cycle de tension continue suivant :

170 heures à 250 volts
200 heures à 315 volts
210 heures à 365 volts
260 heures à 420 volts
240 heures à 460 volts
1 000 heures à 500 volts

soit une durée totale de 2 080 heures à 85 °C.

Les résultats obtenus sont présentés ci-après dans les tableaux I à IX.

(Voir tableaux, pages 7 à 15)

6

## TABLEAU I

Composition du séparateur modèle I :

une feuille de polypropylène poreux de 25 µm sur l'anode
une        "                    "            "        25 µm sur la cathode
une        "                    "            "        25 µm intermédiaire

soit au total trois feuilles de 25 µm constituant un séparateur d'épaisseur totale 75 µm

| Condensateur n° | Caractéristiques initiales | | | | | Caractéristiques après 2080 h à 85°C | | | | |
|---|---|---|---|---|---|---|---|---|---|---|
| | C (µF) | tg δ%[1] | If[2] | Z10kHz[3] | Z100kHz[4] | C (µF) | tg δ% | If | Z10kHz | Z100kHz |
| 1 | 715 | 1,4 | 100 | 29 | 17 | 650 | 3,5 | 340 | 38 | 21 |
| 2 | 720 | 1,3 | 110 | 28 | 16 | 660 | 3,6 | 360 | 38 | 21 |
| 3 | 710 | 1,5 | 52 | 29 | 17 | 650 | 3,8 | 400 | 39 | 22 |
| 4 | 720 | 1,4 | 42 | 29 | 17 | 650 | 3,9 | 400 | 38 | 21 |
| 5 | 710 | 1,4 | 32 | 29 | 17 | pièce hors service à 1512 h | | | | |
| 6 | 710 | 1,4 | 40 | 29 | 17 | 650 | 3,6 | 310 | 38 | 21 |
| 7 | 730 | 1,4 | 24 | 28 | 16 | 660 | 3,8 | 340 | 38 | 22 |
| valeurs moyennes = | 716 | 1,4 | 57 | 28,7 | 16,7 | 653,3 | 3,7 | 358 | 38 | 21,4 |

(1) C et tg δ mesurées à 100 Hz

(2) If  courant de fuite après cinq minutes sous tension 480 Vcc, en µA

(3) et (4) impédances en mΩ

## TABLEAU II

Composition du séparateur modèle II :

une feuille de papier de densité 0,30 épaisseur 75 µm sur l'anode
une " " " 0,30 " 50 µm sur la cathode

soit au total deux feuilles de papier constituant un séparateur d'épaisseur 125 µm

| Condensateur n° | Caractéristiques initiales | | | | | Caractéristiques après 2080 h à 85°C | | | | |
|---|---|---|---|---|---|---|---|---|---|---|
| | C (µF) | tg δ% | If | Z10kHz | Z100kHz | C (µF) | tg δ% | If | Z10kHz | Z100kHz |
| 1 | 700 | 1,2 | 22 | 30 | 18 | pièce hors service à 640 h | | | | |
| 2 | 700 | 1,2 | 24 | 30 | 18 | pièce hors service à 640 h | | | | |
| 3 | 710 | 1,4 | 13 | 30 | 18 | pièce hors serrice à 880 h | | | | |
| 4 | 700 | 1,3 | 10 | 30 | 18 | pièce hors service à 620 h | | | | |
| 5 | 710 | 1,3 | 8 | 30 | 18 | pièce hors service à 881 h | | | | |
| 6 | 710 | 1,1 | 8 | 30 | 18 | pièce hors service à 756 h | | | | |
| 7 | 705 | 1,1 | 8 | 30 | 18 | pièce hors service à 881 h | | | | |
| valeurs moyennes | 705 | 1,3 | 13 | 30 | 18 | | | | | |

0 022 719

## TABLEAU III

Composition du séparateur modèle III :

  une feuille de polypropylène poreux de 25 µm sur l'anode
  une feuille de papier de densité 0,30 épaisseur 50 µm sur la cathode
  une feuille de papier de densité 0,30 épaisseur 50 µm intermédiaire

soit au total trois feuilles constituant un séparateur d'épaisseur totale 125 µm

| Condensateur n° | Caractéristiques initiales | | | | | Caractéristiques après 2080 h à 85°C | | | | |
|---|---|---|---|---|---|---|---|---|---|---|
| | C (µF) | tg δ% | If | Z10kHz | Z100kHz | C (µF) | tg δ% | If | Z10kHz | Z100kHz |
| 1 | 710 | 1,3 | 23 | 30 | 18 | 660 | 2,2 | 350 | 42 | 25 |
| 2 | 700 | 1,3 | 20 | 30 | 18 | 650 | 2,1 | 460 | 44 | 26 |
| 3 | 710 | 1,4 | 10 | 30 | 18 | 660 | 2,1 | 380 | 40 | 24 |
| 4 | 710 | 1,4 | 6 | 31 | 18 | 660 | 2,5 | 370 | 43 | 26 |
| 5 | 710 | 1,4 | 13 | 30 | 18 | 650 | 2,2 | 450 | 42 | 25 |
| 6 | 705 | 1,5 | 5 | 30 | 18 | 650 | 2,2 | 300 | 43 | 26 |
| 7 | 710 | 1,3 | 7 | 32 | 17 | 650 | 2,2 | 400 | 42 | 25 |
| valeurs moyennes | 708 | 1,4 | 12 | 30 | 18 | 654 | 2,2 | 387 | 42,3 | 25 |

0 022 719

## TABLEAU IV

Composition du séparateur modèle IV :

une feuille de papier de densité 0,30 épaisseur 50 µm sur l'anode
une feuille de polypropylène poreux épaisseur 25 µm sur la cathode
une feuille de papier de densité 0,30 épaisseur 50 µm intermédiaire

soit au total trois feuilles constituant un séparateur d'épaisseur totale 125 µm

| Condensateur n° | Caractéristiques initiales | | | | | Caractéristiques après 2080 h à 85°C | | | | |
|---|---|---|---|---|---|---|---|---|---|---|
| | C (µF) | tg δ% | If | Z10kHz | Z100kHz | C (µF) | tg δ% | If | Z10kHz | Z100kHz |
| 1 | 725 | 1,4 | 24 | 30 | 19 | 670 | 1,6 | 330 | 42 | 28 |
| 2 | 730 | 1,8 | 11 | 30 | 19 | pièce hors service à 1153 h | | | | |
| 3 | 725 | 1,8 | 12 | 30 | 19 | 670 | 2,8 | 350 | 55 | 36 |
| 4 | 725 | 1,8 | 10 | 30 | 19 | 670 | 3 | 270 | 58 | 39 |
| 5 | 720 | 1,5 | 10 | 30 | 19 | 670 | 3,1 | 250 | 55 | 36 |
| 6 | 720 | 1,4 | 8 | 30 | 19 | pièce hors service à 1129 h | | | | |
| 7 | 720 | 1,4 | 11 | 30 | 19 | pièce hors service à 1116 h | | | | |
| valeurs moyennes | 723 | 1,6 | 12 | 30 | 19 | 670 | 2,6 | 300 | 52,5 | 35 |

0 022 719

## TABLEAU V

Composition du séparateur modèle V :

une feuille de papier de densité 0,30 épaisseur 50 µm sur l'anode
une feuille de papier de densité 0,30 épaisseur 50 µm sur la cathode
une feuille de polypropylène poreux épaisseur 25 µm intermédiaire

soit au total trois feuilles constituant un séparateur d'épaisseur totale 125 µm

| Condensateur n° | Caractéristiques initiales | | | | | Caractéristiques après 2080 h à 85°C | | | | |
|---|---|---|---|---|---|---|---|---|---|---|
| | C (µF) | tg δ% | If | Z10kHz | Z100kHz | C (µF) | tg δ% | If | Z10kHz | Z100kHz |
| 1 | 710 | 1,3 | 22 | 30 | 18 | pièce | hors | service | à 1504 | h |
| 2 | 730 | 1,3 | 31 | 30 | 18 | pièce | hors | service | à 1413 | h |
| 3 | 730 | 1,4 | 12 | 30 | 18 | 670 | 2,7 | 400 | 43 | 26 |
| 4 | 730 | 1,4 | 12 | 30 | 18 | 680 | 2,9 | 500 | 56 | 37 |
| 5 | 700 | 1,8 | 14 | 30 | 18 | 650 | 3 | 300 | 59 | 36 |
| 6 | 710 | 1,4 | 10 | 30 | 18 | 660 | 3 | 330 | 58 | 37 |
| 7 | 730 | 1,8 | 14 | 30 | 19 | 680 | 3,1 | 280 | 60 | 40 |
| valeurs moyennes | 720 | 1,5 | 16 | 30 | 18 | 668 | 3 | 362 | 55 | 35 |

## TABLEAU VI

Composition du séparateur modèle VI :

une feuille de papier de densité 0,30 épaisseur 75 µm sur l'anode
une feuille de papier de densité 0,30 épaisseur 50 µm sur la cathode
une feuille de papier de densité 0,30 épaisseur 50 µm intermédiaire

soit au total trois feuilles constituant un séparateur d'épaisseur totale 175 µm

| Condensateur n° | Caractéristiques initiales | | | | | Caractéristiques après 2080 h à 85°C | | | | |
|---|---|---|---|---|---|---|---|---|---|---|
| | C (µF) | tg δ% | If | Z10kHz | Z100kHz | C (µF) | tg δ% | If | Z10kHz | Z100kHz |
| 1 | 700 | 1,4 | 23 | 34 | 23 | pièce hors service à 897 h | | | | |
| 2 | 710 | 1,5 | 13 | 34 | 24 | pièce hors service à 675 h | | | | |
| 3 | 700 | 1,5 | 11 | 34 | 24 | pièce hors service à 895 h | | | | |
| 4 | 705 | 1,4 | 14 | 34 | 24 | pièce hors service à 675 h | | | | |
| 5 | 710 | 1,6 | 10 | 34 | 24 | pièce hors service à 897 h | | | | |
| 6 | 720 | 1,4 | 11 | 33 | 24 | pièce hors service à 675 h | | | | |
| 7 | 715 | 1,5 | 12 | 34 | 24 | pièce hors service à 700 h | | | | |
| valeurs moyennes | 709 | 1,5 | 13 | 34 | 24 | | | | | |

0 022 719

## TABLEAU VII

Composition du séparateur modèle VII :

une feuille de polypropylène poreux épaisseur 25 μm sur l'anode
une feuille de papier de densité 0,30 épaisseur 75 μm sur la cathode
une feuille de papier de densité 0,30 épaisseur 75 μm intermédiaire

soit au total trois feuilles constituant un séparateur d'épaisseur totale 175 μm

| Condensateur n° | Caractéristiques initiales | | | | | Caractéristiques après 2080 h à 85°C | | | | |
|---|---|---|---|---|---|---|---|---|---|---|
| | C (μF) | tg δ% | If | Z10kHz | Z100KhZ | C (μF) | tg δ% | If | Z10kHz | Z100kHz |
| 1 | 700 | 1,4 | 15 | 34 | 24 | 650 | 2,5 | 370 | 45 | 30 |
| 2 | 705 | 1,5 | 10 | 35 | 26 | 650 | 2,2 | 260 | 45 | 30 |
| 3 | 705 | 1,5 | 10 | 36 | 26 | 650 | 2,2 | 270 | 45 | 31 |
| 4 | 690 | 1,5 | 10 | 36 | 26 | 640 | 2,3 | 250 | 45 | 32 |
| 5 | 690 | 1,5 | 7 | 36 | 26 | 630 | 2,3 | 310 | 45 | 31 |
| 6 | 700 | 1,4 | 10 | 36 | 26 | 640 | 2,3 | 300 | 46 | 32 |
| 7 | 690 | 1,6 | 10 | 36 | 26 | 640 | 2,4 | 290 | 47 | 32 |
| valeurs moyennes | 697 | 1,5 | 10 | 35,5 | 26 | 643 | 2,3 | 293 | 45,7 | 31 |

## TABLEAU VIII

Composition du séparateur modèle VIII :

une feuille de papier de densité 0,30 épaisseur 75 µm sur l'anode
une feuille de papier de densité 0,30 épaisseur 75 µm sur la cathode
une feuille de polypropylène poreux d'épaisseur 25 µm intermédiaire

soit au total trois feuilles constituant un séparateur d'épaisseur totale 175 µm

| Condensateur n° | Caractéristiques initiales | | | | | Caractéristiques après 2080 h à 85°C | | | | |
|---|---|---|---|---|---|---|---|---|---|---|
| | C (µF) | tg δ% | If | Z10kHz | Z100kHz | C (µF) | tg δ% | If | Z10kHz | Z100kHz |
| 1 | 705 | 1,4 | 25 | 34 | 24 | pièce hors service à 1128 h | | | | |
| 2 | 720 | 1,5 | 15 | 34 | 24 | pièce hors service à 1131 h | | | | |
| 3 | 730 | 1,5 | 10 | 36 | 26 | pièce hors service à 1125 h | | | | |
| 4 | 720 | 1,5 | 12 | 36 | 26 | pièce hors service à 1130 h | | | | |
| 5 | 730 | 1,6 | 12 | 36 | 26 | 680 | 3,7 | 350 | 70 | 50 |
| 6 | 730 | 1,8 | 12 | 36 | 26 | 680 | 3,6 | 500 | 69 | 51 |
| 7 | 725 | 1,8 | 12 | 34 | 24 | 690 | 3,5 | 390 | 66 | 50 |
| valeurs moyennes | 723 | 1,6 | 14 | 35,4 | 25 | 683 | 3,6 | 413 | 68 | 50 |

Les valeurs moyennes obtenues dans chacun des tableaux de résultats sont regroupées dans le tableau IX ci-après pour faciliter la comparaison :

## TABLEAU IX

| Séparateur du tableau n° | Epaisseur du séparateur en µm | Résistance série du séparateur $\Omega.cm^2$ | Caractéristiques initiales | | | | | Caractéristiques après 2080 h à 85°C | | | | | Nombre de défauts sur 7 pièces |
|---|---|---|---|---|---|---|---|---|---|---|---|---|---|
| | | | C(µF) | tg δ% | If | Z10kHz | Z100kHz | C(µF) | tg δ% | If | Z10kHz | Z100kHz | |
| I | 75 | 67 | 716 | 1,4 | 57 | 28,7 | 16,7 | 653 | 3,7 | 358 | 38 | 21,4 | 1 |
| II | 125 | 74 | 705 | 1,3 | 13 | 30 | 18 | pièce hors service | | | | | 7 |
| III | 125 | 74 | 708 | 1,4 | 12 | 30 | 18 | 654 | 2,2 | 387 | 42,3 | 25 | 0 |
| IV | 125 | 80 | 723 | 1,6 | 12 | 30 | 19 | 670 | 2,6 | 300 | 52,5 | 35 | 3 |
| V | 125 | 75 | 720 | 1,5 | 16 | 30 | 18 | 668 | 3 | 362 | 55 | 35 | 2 |
| VI | 175 | 109 | 709 | 1,5 | 13 | 34 | 24 | pièce hors service | | | | | 7 |
| VII | 175 | 115 | 697 | 1,5 | 10 | 35 | 26 | 643 | 2,3 | 293 | 45,7 | 31 | 0 |
| VIII | 175 | 115 | 723 | 1,6 | 14 | 35 | 25 | 683 | 3,6 | 413 | 68 | 50 | 4 |

0 022 719

**0 022 719**

Discussion

L'électrolyte utilisé pour comparer les condensateurs confectionnés avec les séparateurs des modèles I à VIII a été formulé selon les indications du brevet américain n° 3 638 077, exemple 1, de manière à obtenir une résistivité de 1 365 $\Omega \cdot$ cm à 20 °C. Le mélange solvant employé contient 11 moles de butyrolactone et 0,80 mole d'éthylène glycol.

Le brevet américain n° 3 908 157 indique au tableau VIII qu'on n'obtient qu'une porosité électrique très faible avec le polypropylène poreux imprégné par un électrolyte employant comme solvant soit la butyrolactone, soit le glycol.

On a découvert d'une manière surprenante que le polypropylène poreux s'imprégnait bien avec l'électrolyte pour haute tension du brevet américain n° 3 638 077 indiqué ci-dessus et dont la phase solvante est un mélange de ces deux solvants, après 24 heures de séchage des bobinages à 100 °C, mise sous vide à 90 °C pendant deux heures, imprégnation par l'électrolyte injecté sous vide à 90 °C et maintien à cette température sous immersion pendant 15 heures après retour à la pression atmosphérique.

En effet, les condensateurs du tableau I qui contiennent un séparateur à trois feuilles de polypropylène poreux ont des caractéristiques initiales très bonnes avec une moyenne de pertes diélectriques de 1,4 % et une valeur moyenne d'impédance mesurée à 100 kHz de 16,7 m$\Omega$ de laquelle on déduit que la porosité électrique obtenue est % P = 25. Cette valeur est supérieure à presque toutes celles indiquées au tableau VIII du brevet américain n° 3 908 157.

La comparaison des résultats de l'essai de durée de vie contenus dans les tableaux qui précèdent permet de tirer les conclusions suivantes :

— les condensateurs à séparateur en papier d'épaisseur 125 $\mu$m du tableau II et d'épaisseur 175 $\mu$m du tableau VI ont été tous détruits tandis que ceux qui contiennent une feuille de polypropylène poreux dans le séparateur pour une épaisseur totale identique ont résisté partiellement (tableaux IV, V, VIII) ou totalement (tableaux III et VII) ;

— les tableaux III et VII montrent de manière surprenante et imprévisible que les condensateurs ayant une feuille de polypropylène poreux placée contre l'anode ont résisté à l'essai sans présenter de défaut aussi bien en épaisseur totale de 125 $\mu$m que de 175 $\mu$m ;

— les condensateurs qui ont une feuille de papier placée contre l'anode (tableaux IV, V et VIII) présentent des dérives beaucoup plus élevées en pertes diélectriques (tg $\delta$%) et en impédance mesurée à 10 et 100 kHz que ceux dans lesquels on a placé une feuille de polypropylène poreux contre l'anode (tableaux III et VII).

Le tableau I montre que le séparateur réalisé avec trois feuilles de polypropylène poreux présente un défaut et qu'il faudrait ajouter au moins une quatrième feuille pour résister à l'essai, mais ceci ne présente pas d'intérêt. En effet, la résistance série de ce séparateur à trois feuilles est de 67,4 $\Omega \cdot$ cm² et avec quatre feuilles elle passerait à 92 $\Omega$/cm², tandis que le séparateur modèle III (tableau III) a bien fonctionné sans défaut alors que sa résistance série est de 74,8 $\Omega \cdot$ cm² et de plus il a donné une évolution plus faible des pertes diélectriques.

Le tableau IX résume ces comparaisons sur les valeurs moyennes des caractéristiques indiquées dans les tableaux I à VIII et donne dans la colonne 3 la valeur de la résistance série de chaque séparateur en $\Omega \cdot$ cm². L'examen de ces valeurs en fonction du nombre des défauts indiqués dans la colonne 14 montre que celui-ci ne dépend pas de cette résistance série. Cependant, il est intéressant de savoir si l'influence de la position de la feuille de polypropylène poreux est transposable à des séparateurs de résistance série beaucoup plus élevée.

Dans ce but une deuxième série de condensateurs a été fabriquée avec une anode de 380 × 9 cm en aluminium de titre 99,99 d'épaisseur 90 $\mu$m gravé et formée anodiquement à 600 volts identique à celle utilisée dans les condensateurs précédents, et avec une cathode de 30 $\mu$m d'épaisseur en aluminium gravé, séparées par les séparateurs décrits dans les tableaux X et XI qui suivent.

Les bobinages ainsi obtenus ont été imprégnés par le même électrolyte que les condensateurs des tableaux I à VIII et montés dans des boîtiers analogues de diamètre 51 mm et hauteur 114 mm.

Cette deuxième série de condensateurs a été introduite dans l'enceinte chauffée à une température uniforme de 85 °C et soumise au cycle de tension continue suivant :

1 000 heures à 500 volts
960 heures à 525 volts

soit une durée totale de 1 960 heures à 85 °C.

Les résultats obtenus sont présentés dans les tableaux X et XI ci-après :

## TABLEAU X

Composition du séparateur :

une feuille de papier de densité 0,55 épaisseur 50 µm sur l'anode
une feuille de polypropylène poreux d'épaisseur 25 µm sur la cathode
une feuille de papier de densité 0,55 épaisseur 50 µm intermédiaire

soit au total trois feuilles constituant un séparateur d'épaisseur totale 125 µm

| Condensateur n° | Caractéristiques initiales | | | | | Caractéristiques après 1960 h à 85°C | | | | |
|---|---|---|---|---|---|---|---|---|---|---|
| | C (µF) | tg δ% | If | Z10kHz | Z100kHz | C (µF) | tg δ% | If | Z10kHz | Z100kHz |
| 1 | 600 | 4,6 | 600 | 112 | 72 | 520 | 6,5 | 160 | 155 | 86 |
| 2 | 605 | 4,5 | 580 | 108 | 68 | 520 | 6,7 | 170 | 150 | 100 |
| 3 | 600 | 4,6 | 650 | 108 | 67 | 520 | 6,7 | 150 | 150 | 99 |
| 4 | 615 | 4,7 | 500 | 105 | 68 | pièce hors service à 1432 h | | | | |
| valeurs moyennes | 605 | 4,6 | | 108 | 69 | 520 | 6,6 | | 152 | 95 |

## TABLEAU XI

Composition du séparateur :

une feuille de polypropylène poreux d'épaisseur 25 μm sur l'anode
une feuille de papier de densité 0,55 épaisseur 50 μm sur la cathode
une feuille de papier de densité 0,55 épaisseur 50 μm intermédiaire

soit au total trois feuilles constituant un séparateur d'épaisseur totale 125 μm

| Condensateur n° | Caractéristiques initiales | | | | | Caractéristiques après 1960 h à 85°c | | | | |
|---|---|---|---|---|---|---|---|---|---|---|
| | C (μF) | tg δ% | If | Z10kHz | Z100kHz | C (μF) | tg δ% | If | Z10kHz | Z100kHz |
| 1 | 610 | 5,1 | 600 | 110 | 70 | 520 | 6,8 | 200 | 155 | 96 |
| 2 | 605 | 4,8 | 700 | 110 | 68 | 490 | 4,8 | 370 | 145 | 88 |
| 3 | 610 | 4,8 | 1900 | 110 | 72 | 500 | 4,7 | 340 | 150 | 92 |
| 4 | 615 | 4,8 | 1900 | 110 | 72 | 500 | 4,8 | 220 | 135 | 88 |
| valeurs moyennes | 610 | 4,9 | | 110 | 70 | 502 | 5,2 | | 146 | 89 |

La valeur moyenne de la résistance série du séparateur des condensateurs du tableau X est de $420\ \Omega.\text{cm}^2$ et celle des condensateurs du tableau XI de $426\ \Omega.\text{cm}^2$

**0 022 719**

La comparaison des tableaux X et XI permet de constater que :

— les condensateurs ayant une feuille de polypropylène poreux placée contre l'anode (tableau XI) ont résisté à l'essai sans présenter de défaut ;

— les condensateurs qui ont une feuille de papier placée contre l'anode (tableau X) ont été partiellement détruits et présentent des dérives plus élevées en pertes diélectriques (tg δ%) et en impédance mesurée à 10 et 100 kHz.

L'influence de la position du film plastique poreux dans le séparateur composite est donc transposable aux séparateurs de résistance série élevée.

Les scintillations qui se produisent en certains points de la couche anodique sont le siège de dégagements gazeux. Le papier en contact avec la feuille d'anode permet à ces gaz de progresser dans l'épaisseur du séparateur en y expulsant l'électrolyte et d'y provoquer un claquage.

En effet, le papier de densité 0,30 a une porosité cellulaire de 80 % avec des pores dont la section varie d'environ $0,008 \cdot 10^{-4}$ à $3,2 \cdot 10^{-4}$ cm². Ces pores établissent une pression capillaire faible d'environ 10 à 175 g/cm² pour un liquide tel que le glycol, par exemple. Pour une feuille de plastique poreuse en contact avec la feuille anode telle que par exemple le polypropylène poreux utilisé dans ce qui précède, les gaz provenant des régénérations de la couche anodique ne peuvent plus se développer dans l'épaisseur du séparateur mais sont laminés et contraints de diffuser dans les interstices compris entre la surface de l'anode gravée et la feuille plastique. En effet, dans le polypropylène poreux la porosité cellulaire qui est de 35 à 50 % est faite avec des pores dont la section varie d'environ $0,0045 \cdot 10^{-8}$ cm² à $0,160 \cdot 10^{-8}$ cm² et la pression capillaire d'un liquide tel que le glycol contenu dans ces pores est de l'ordre de 4 à 20 kg/cm², de sorte que la feuille de plastique poreuse imprégnée forme une barrière étanche aux gaz sachant que la pression de diffusion des gaz entre les feuilles est de l'ordre de 1 kg/cm².

Pour que le séparateur composite permette l'amélioration de la tenue à la tension, la feuille de plastique poreuse doit avoir une porosité cellulaire supérieure à 30 % et des pores dont la section soit inférieure à $0,2 \cdot 10^{-8}$ cm².

Le séparateur composite de l'invention apporte une émélioration considérable du facteur de qualité défini par l'expression $V^2/Zv$. Une comparaison a été établie entre des condensateurs de 480 volts du marché commercial actuel provenant de trois fabricants différents repérés 1, 2 et 3 et un condensateur fabriqué avec le séparateur du modèle III décrit dans ce qui précède. Les mesures pour être les plus exactes ont été effectuées sur les bobinages extraits des boîtiers de ces condensateurs.

Le tableau XII ci-après donne les résultats de cette comparaison.

(Voir tableau, p. 20)

19

### TABLEAU XII. Facteur de qualité $V^2/Zv$

| Fabricant | Diamètre de broche cm | Diamètre de la bobine cm | Hauteur de la bobine cm | Volume de la bobine $cm^3$ | C ($\mu F$) | $v$ | Z | V | $\dfrac{V^2}{Zv}$ |
|---|---|---|---|---|---|---|---|---|---|
| n° 1 | 0,5 | 3,8 | 11,9 | 132,6 | 400 | 0,331 | 0,081 | 480 | $8,6.10^6$ |
| n° 2 | 0,5 | 3 | 11,9 | 82 | .290 | 0,282 | 0,097 | 480 | $8,4.10^6$ |
| n° 3 | 1 | 4,9 | 10 | 180 | 772 | 0,234 | 0,095 | 480 | $10,4.10^6$ |
| séparateur modèle III | 1 | 4,4 | 10,2 | 147 | 708 | 0,207 | 0,018 | 480 | $61,8.10^6$ |

V = tension de fonctionnement du condensateur en volts

Z = impédance du condensateur à 100 kHz en ohms

$v$ = volume spécifique en $cm^3/\mu F$

Dans ce tableau, le séparateur modèle III est comparé aux autres bobinages à 480 volts pour la facilité, mais il peut fonctionner à 500 volts, comme les résultats décrits dans ce qui précède l'ont montré.

0 022 719

Il est bien connu que la résistivité des électrolytes et la densité apparente du papier séparateur doivent être réglées par valeurs croissantes au fur et à mesure que la tension de service des condensateurs s'accroît, de manière que la résistance série du séparateur imprégné augmente en fonction de cette tension de service.

Il est donc remarquable de constater que le séparateur composite selon l'invention comportant, en combinaison, au moins une feuille de polypropylène poreux et au moins une feuille de papier absorbant à faible densité apparente permet simultanément un abaissement considérable de la résistance série et une meilleure tenue à la tension.

Pour les diverses applications des condensateurs électrolytiques, notamment pour celles citées dans le préambule, on peut réaliser des condensateurs avec une impédance de 18 à 25 mΩ (au lieu de 80 à 100 mΩ pour les condensateurs de la technique actuelle) utilisables avec des intensités alternatives deux à trois fois supérieures à celles mises en œuvre avec les condensateurs de la technique actuelle, grâce aux séparateurs selon l'invention.

Le condensateur fabriqué avec le séparateur modèle III de l'invention apporte une amélioration du facteur de qualité de l'ordre de six fois.

L'invention n'est pas limitée à la formulation d'électrolyte indiquée dans ce qui précède. Des résultats analogues peuvent être obtenus avec un électrolyte composé de 11 moles de glycol, 1,5 mole de butyrolactone, 7 moles d'acide borique et 1,4 mole d'ammoniac, mais avec des valeurs d'impédance plus élevées.

La figure 3, qui donne à la température de 25 °C la comparaison des courbes d'impédance dans la bande de fréquence allant de $10^2$ à $3 \cdot 10^5$ Hz relevées sur des condensateurs munis respectivement du séparateur de modèle I à trois feuilles de polypropylène poreux d'épaisseur totale 75 μm (courbe I), du séparateur de modèle II à deux feuilles de papier absorbant d'épaisseur totale 125 μm (courbe II) et du séparateur composite modèle III à feuille de polypropylène poreux et deux feuilles de papier d'épaisseur totale 125 μm (courbe III), montre que les différences entre les trois modèles sont faibles, et cependant seul le modèle III a résisté aux essais de durée de vie à 85 °C sous 500 volts et pas les autres. La courbe IV, relevée sur un condensateur de 650 μF 480 V du commerce, illustre le gain obtenu grâce au séparateur composite selon l'invention. La figure 4, qui établit la même comparaison à la température de 105 °C entre les mêmes éléments, et la figure 5, correspondant à la température de − 40 °C, appellent les mêmes observations que la figure 3.

Il résulte de ce qui précède que l'invention permet de réaliser, d'une manière inattendue, un séparateur composite pour condensateurs électrolytiques présentant une résistance série Z réduite, tout en permettant l'application d'une tension de service élevée V, c'est-à-dire en définitive un cœfficient de qualité $V^2/Zv$ élevé (en appelant v le volume spécifique du condensateur).

Comme il va de soi et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Condensateur électrolytique, composite caractérisé par le fait qu'il comporte, entre une anode et une cathode, un séparateur constitué par l'association d'au moins une feuille de polypropylène poreux et d'au moins une feuille de papier absorbant imprégné par un électrolyte, la feuille du séparateur disposée contre l'anode étant une feuille de polypropylène.

2. Condensateur électrolytique selon la revendication 1, caractérisé par le fait que les feuilles du séparateur sont imprégnées par un électrolyte.

3. Condensateur selon la revendication 1 ou 2, caractérisé par le fait que le polypropylène a une porosité cellulaire ouverte d'au moins 30 % et possède un réseau de capillaires de section inférieure à $0,2 \cdot 10^{-8}$ cm$^2$.

4. Condensateur selon l'une quelconque des revendications précédentes, caractérisé par le fait que le papier absorbant possède une densité apparente non supérieure à 0,55.

5. Condensateur selon l'une quelconque des revendications précédentes, caractérisé par le fait que l'électrolyte comporte dans sa phase solvante au moins un solvant choisi dans le groupe constitué par la butyrolactone et l'éthylène glycol.

## Claims

1. A composite electrolytic capacitor characterised by the fact that it comprises, between an anode and a cathode, a separator formed by the association of at least one sheet of porous polypropylene and at least one sheet of absorbant paper impregnated with an electrolyte, the sheet of the separator disposed against the anode being a sheet of polypropylene.

2. An electrolytic capacitor according to claim 1 characterised by the fact that the sheets of the separator are impregnated by an electrolyte.

3. A capacitor according to claim 1 or 2 characterised by the fact that the polypropylene has an open cellular porosity of at least 30 % and possesses a network of capilliaries of section less than $0.2 \cdot 10^{-8}$ cm².

4. A capacitor according to any one of the preceding claims characterised by the fact that the absorbant paper has a relative density not greater than 0.55.

5. A capacitor according to any one of the preceding claims characterised by the fact that the electrolyte comprises in its solvent phase at least one solvent chosen from the group formed by butyrolactone and ethylene glycol.

## Ansprüche

1. Zusammengesetzter elektrolytischer Kondensator, dadurch gekennzeichnet, daß er zwischen einer Anode (1) und einer Kathode (3) einen Separator ($S_2$, $S_3$) aufweist, der aus der Vereinigung wenigstens eines porösen Blattes aus Polypropylen und wenigstens eines mit einem Elektrolyten imprägnierten absorbierenden Papierblatt (5) besteht, wobei das Polypropylenblatt (6) des Separators der Anode (1) anliegt.

2. Elektrolytischer Kondensator nach Anspruch 1, dadurch gekennzeichnet, daß die Blätter des Separators ($S_2$, $S_3$) mit einem Elektrolyten imprägniert sind.

3. Elektrolytischer Kondensator nach Anspruch 1 oder 2, dadurch gekennzeichnet, daß das Polypropylenblatt (6) eine offenzellige Porosität von wenigstens 30 % und ein Kapillarnetz aufweist, das im Querschnitt unter $0,2 \cdot 10^{-8}$ cm² liegt.

4. Elektrolytischer Kondensator nach einem der Ansprüche 1 bis 3, dadurch gekennzeichnet, daß die scheinbare Dichte des absorbierenden Papiers nicht über 0,55 beträgt.

5. Elektrolytischer Kondensator nach einem der Ansprüche 1 bis 4, dadurch gekennzeichnet, daß der Elektrolyt in seiner löslichen Phase mindestens ein Lösungsmittel aus der das Butyrolacton und das Äthylenglykol enthaltenden Gruppe aufweist.

# Fig.1.

# Fig.2.

1

# Fig.3.

# Fig.4.